# EUROPEAN PATENT APPLICATION

(11) **EP 1 049 034 A2**
(43) Date of publication of application: **02.11.2000**
(21) Application number: 00108716.2
(22) Date of filing: 22.04.2000
(51) Int. Cl.: G06F 17/60

(54) **Mutual fund interface**

(30) Priority: 26.04.1999 US 299838
(71) Applicant: MetaMarkets.com, Inc., Menlo Park, California 94025 (US)
(72) Inventor: Luskin, Donald L., Menlo Park, California 94025 (US); Nadig, Davis H., Boston, Massachusetts 02210 (US)
(74) Representative: Eisenführ, Speiser & Partner

(57) **Abstract**

A web-based system for operating an interactive mutual fund in which at-large customers have direct access to real-time portfolio information (trade list, security positions, trade decisions and timing) as well as access to the fund advisor and other at-large customers. The interactive mutual fund develops a fund that is the result of the collective input of the advisor and the customers.

## Description

### BACKGROUND OF THE INVENTION

The present invention relates generally to an interactive mutual fund and an interface to an online mutual fund, and more specifically to a mutual fund interface for use in conjunction with a World Wide Web (WWW) based Internet mutual fund.

Mutual funds are well known pooled investment vehicles in which securities are managed for a fee by a professional investment advisor. The share price of a mutual fund is based upon the fund's net asset value-the market value of all securities held by the fund divided by the number of fund shares outstanding. Mutual fund shares are redeemed at their net asset value from the fund.

Mutual funds are a form of investment company, which are regulated under the Investment Co. Act of 1940. As such, there are specific requirements and limitations with respect to establishment and operation of a mutual fund. For example, a mutual fund must provide a prospectus to a prospective fund investor before sales may be solicited, shareholders must be sent complete financial reports at least semiannually, and securities and cash must be kept by either a bank or a broker who is a member of a national securities exchange. A mutual fund retains a financial advisor to control the acquisition and timing of trades of the securities in the mutual fund.

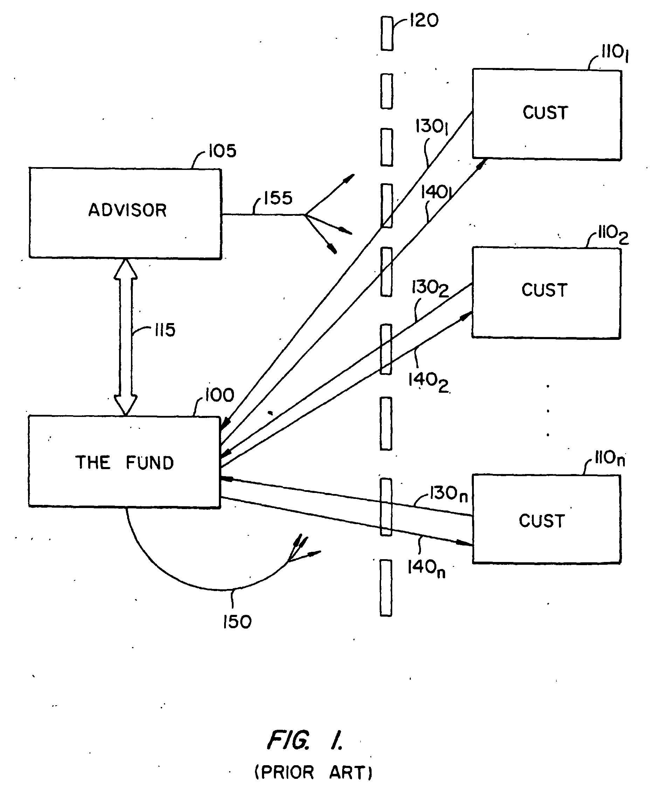

Fig. 1 is a diagram illustrating a typical structure for a prior art mutual fund 100 and its interaction with a fund advisor 105 and at-large customers 110ᵢ. Mutual fund 100 includes, directly or indirectly, various support services including a broker and back office or transfer agent functionality. Customers 110ᵢ provide the cash and individual decisions, based upon a prospectus, to purchase shares of mutual fund 100. Fund advisor 105 is responsible for selecting, managing and transacting in the securities and other assets held by mutual fund 100. Advisor 105 and mutual fund 100 have a direct and private channel of communication 115 through which fund information is exchanged, including information as to executed trades, portfolio holdings, research data, and various metrics. Fund 100 holds the securities, cash, and other assets. Fund 100 also maintains appropriate records to ensure compliance with federal government and state registration regulations, files required documents, prepares and distributes prospectuses, sales material, advertising, quarterly reports and other shareholder documents, maintains shareholder account records, and performs bookkeeping, accounting services, preparation of tax returns, bonding and insurance.

As illustrated in Fig. 1, an interface zone 120 exists between each customer 110ᵢ and fund 100 and advisor 105. Mutual fund 100 provides for minimal exchange of information across interface zone 120. A particular customer 110ₓ may make a request 130ₓ of mutual fund 100. Request 130ₓ includes requests for a prospectus, purchase requests, account balance information, and any investment information. All requests 130ᵢ are sent to fund 100. These types of requests are standardized and typically limited to conventional generic requests that may be answered by similarly generic responses.

In response to request 130ₓ, mutual fund 100 sends appropriate information to customer 110ₓ as a response 140ₓ. Most commonly, requests 130ᵢ are made via telephone, or mail. Similarly, responses 140ᵢ are most commonly mailed to customer 110ᵢ. Information provided to any customer 110ᵢ across interface zone 120 is limited and not particularly timely.

Some mutual funds 100 provide a mechanism for a customer 110ᵢ to make requests 130ᵢ, and to receive a response 140ᵢ, via the Internet. The requests and responses are otherwise the same, the difference being the medium used to exchange the data.

On occasion, there is a need to communicate information from fund 100 or advisor 105 to customers 110ᵢ. It has been known to issue broadcast type messages 150 from mutual fund 100. Broadcast message 150 is a general communication, such as the required semiannual report, that is not customized or specifically requested by any single customer 110ₓ. It is most common for such information to be sent from advisor 105 to mutual fund 100 via private channel 115 and then issued as broadcast message 150.

### SUMMARY OF THE INVENTION

The present invention provides for a simple, efficient interface to a mutual fund and a method of operating such mutual fund. The mutual fund, a regulated investment company, provides a mechanism for each at-large customer to interact across an interface zone directly with the advisor of the fund. These at-large customers have direct access to the mutual fund's holdings and trading activities in real time, and may comment directly on the list via email, message boards, chat rooms, or other interaction mode with the advisor and other at-large customers. Other interaction events are possible, in which an at-large customer may make recommendations on securities, or other trading specific input into operation of the mutual fund.

In one preferred embodiment, a method for operating a mutual fund, the method includes the steps of establishing an investment company, including a fund advisor, and a mutual fund, to create, maintain, market and sell to an at-large customer a pooled investment vehicle that invests in a diversified, open-ended pool of securities; and interfacing the pooled investment vehicle to the at-large customer such that a real-time portfolio status of the pooled investment vehicle is communicated to the customer.

In another preferred embodiment, a method for responding to a request of an at-large customer of a mutual fund by use of a computer system, the computer system including a processor coupled to a display, user input device and a network, the method including the steps of using the processor to login to the mutual find via the network; accepting signals from the user input device to indicate selection by the at-large customer of an interaction event; communicating the interaction event from the computer system to the advisor of the mutual fund via the network; and responding to the interaction event by communicating back to the at-large customer from the advisor.

Reference to the remaining portions of the specification, including the drawing and claims, will realize other features and advantages of the present invention. Further features and advantages of the present invention, as well as the structure and operation of various embodiments of the present invention, are described in detail below with respect to accompanying drawing. In the drawing, like reference numbers indicate identical or functionally similar elements.

### BRIEF DESCRIPTION OF THE DRAWINGS

Fig. 1 is a diagram illustrating a typical structure for a prior art mutual fund;
Fig. 2 is a schematic diagram of a high-level view of a system over which an interactive mutual fund 205 might operate; and
Fig. 3 is a block diagram of a preferred structure for interactive mutual fund.

### DESCRIPTION OF THE SPECIFIC EMBODIMENTS

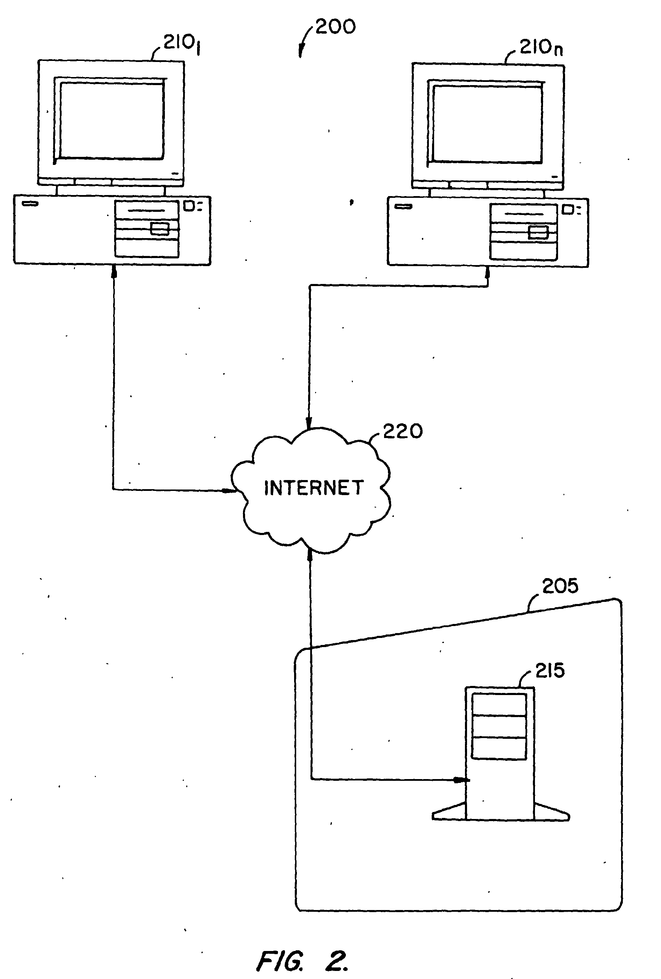

Fig. 2 is a schematic diagram of a high-level view of a system 200 over which an interactive mutual fund 205 might operate. In system 200, one or more at-large customers 210 communicate with mutual fund 205. Mutual fund 205 includes one or more servers 215 which store data and applications for implementing interactive mutual fund 205 over a network 220. Network 220 is labeled "Internet" to represent the global internetwork of networks commonly referred to as "the Internet" (with a capital "I"); however, it should be apparent after reading this disclosure that other networks may be substituted for the Internet, such as local area networks, dial-up networks, online service provider networks, wide area networks, private networks, and the like.

In the preferred embodiment, clients 210 and servers 215 are computer systems, such as personal PC's, having a microprocessor, RAM, non-volatile memory, I/O and network connectivity. The non-volatile memory, e.g. hard drive, CD-ROMs or removable disk, store applications and data for use by the processor to implement the features of the present invention. The I/O may include a display, keyboard and a relative-pointing device such as a mouse or trackball.

Using one of clients 210, an at-large customer interacts with server 215, using protocols which are well known in the art, such as the HyperText Transport Protocol (HTTP) overlying a TCP/IP (Transport Control Protocol/Internet Protocol) communication channel. As should be apparent from this disclosure, other protocols could be used instead of HTTP. For example a customer might interact with one embodiment of a server as a kiosk in a public place, such as a financial institution, and the kiosk might use a specialized protocol other than HTTP. In some cases, Java protocols and applets might be used.

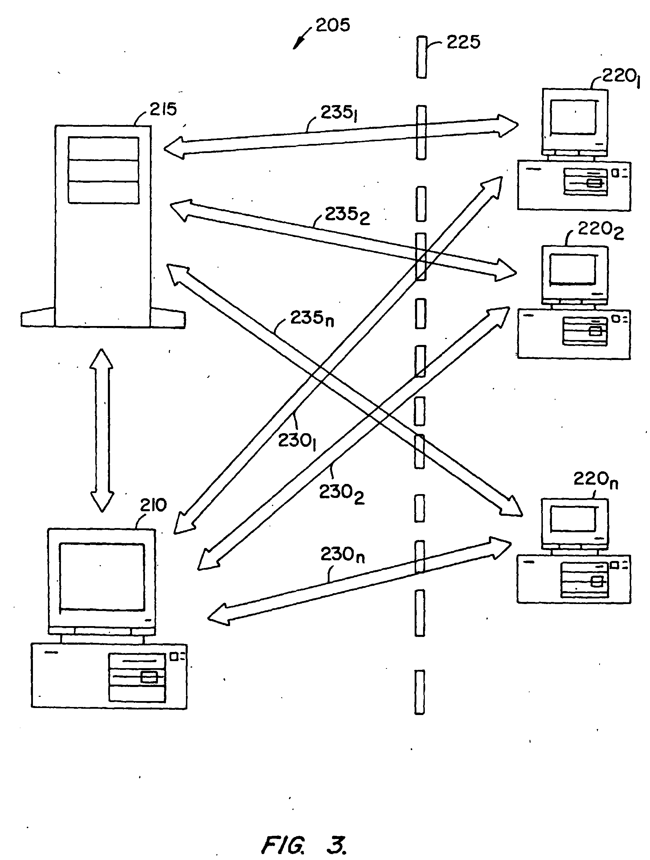

Fig. 3 is a block diagram of a preferred structure for interactive mutual fund 205. Interactive mutual fund 205 includes a mutual fund 210, a fund advisor 215, and one or more at-large customers 220ᵢ that communicate with interactive mutual fund 205 across an interface 225. As used herein, the term at-large customer refers to persons who are not privy to private information of a mutual fund arising due to a special relationship with the mutual fund, such as being a fund advisor, an officer or employee of the mutual fund, or any of their agents or retained professionals.

As opposed to the discrete request and response actions depicted in Fig. 1, any customer 220ᵢ may open a customer-fund communication channel 230ᵢ or a customer-advisor communication channel 235ᵢ. Channels 230ᵢ serve a role similar to the requests and responses shown in Fig. 1, and include enhanced functionality. Further, channels 235ᵢ offer additional functionality not available in prior art mutual funds 100.

Interactive mutual fund 205 provides real-time portfolio information over channels 235ᵢ to each at-large customer 220ᵢ. Real-time portfolio information includes a complete listing of the positions in securities, cash and other assets held in mutual fund 205; the trading activity of mutual fund 205; and other performance metrics available only to fund advisor 215; all updated as soon as practicable following any changes in any of them.

Interactive mutual fund 205, in another preferred embodiment, provides channels 235ᵢ for receipt of interaction event requests from an at-large customer 220ᵢ, and return of an appropriate response from advisor 215 back to the at-large customer 220ᵢ. The type of interaction event and corresponding appropriate response, may include messages posted on a message board maintained and operated by advisor 215 or fund 210, participation in one or more chat room sessions with advisor 215 or guests sponsored by advisor 215 or fund 210, or participation in polls conducted by advisor 215 or fund 210, among other types of interaction events.

Interactive mutual fund 205 is more than interactive due to the exchange of real-time portfolio information, trading activity information, and other metrics. Further, additional interactivity arises by virtue of the establishment of two-way communications channels 235ᵢ between advisor 215 and the at-large customers 220ᵢ. Further, many of the interaction mechanisms are configured by fund advisor 215, in the preferred embodiment, to permit the exchange of information between at-large customers 220ᵢ. While the ultimate responsibility for determining investment policy, security holdings, and trading activity is with fund advisor 215, the interaction events of interactive mutual fund 205 permits customization and adjustment of policy, holdings, and trading activity based upon input, discussion, research and analysis from all of at-large customers 220ᵢ working cooperatively with advisor 215, a wider group than has every before been realized. The submissions from the at-large customers not only include commentary and discussion on the investment policy, security holdings, and trading activity, but also include recommendations (for or against) additional securities that could be included in the security holdings of mutual fund 205.

The above description is illustrative and not restrictive. Many variations of the invention will become apparent to those of skill in the art upon review of this disclosure. The scope of the invention should, therefore, be determined not with reference to the above description, but instead should be determined with reference to the appended claims along with their full scope of equivalents.

## Claims

1. A method for operating a mutual fund, the method comprising the steps of:
establishing an investment company, including a fund and a fund advisor, to create, maintain, market and sell to an at-large customer a pooled investment vehicle that invests in a diversified, open-ended pool of securities; and
interfacing said pooled investment vehicle to said at-large customer such that a real-time portfolio status of said pooled investment vehicle is communicated to said at-large customer.

2. A method for displaying to an at-large customer of a mutual fund a real-time portfolio status of the mutual fund by use of a computer system, the computer system including a processor coupled to a display, user input device and a network, the method comprising the steps of:
using the processor to login to the mutual fund via the network; and
displaying on the display the real-time portfolio status to the at-large customer.

3. A method for responding to a request of an at-large customer of a mutual fund by use of a computer system, the computer system including a processor coupled to a display, user input device and a network, the method comprising the steps of:
using the processor to login to the mutual fund via the network;
accepting signals from the user input device to indicate selection by the at-large customer of an interaction event;
communicating said interaction event from the computer system to the mutual fund via the network; and
responding to said interaction event by communicating back to the at-large customer.

4. A computer system for interfacing to a mutual fund from an at-large customer, the system comprising:
a processor for executing programmed instructions and for storing and retrieving data;
a program memory, coupled to said processor, for storing program instructions for execution by said processor;
an output device, coupled to said processor, for displaying data;
an input device, coupled to said processor, for accepting input data associated with the pooled investment vehicle, including:
a login sequence for the at-large customer; and
an interaction event request; and
an interface program, stored in said memory and executable by said processor, for:
logging into the mutual fund using said login sequence;
presenting to the at-large shareholder a real-time portfolio status on said output device;
transmitting said interaction event request to the mutual fund to request initiation of an interaction event with the mutual fund; and
receiving, in real-time, a report from the mutual fund in response to said interaction event request.
